# EUROPEAN PATENT APPLICATION

(11) **EP 4 521 523 A1**
(43) Date of publication of application: **12.03.2025**
(21) Application number: 24198697.5
(22) Date of filing: 05.09.2024
(51) Int. Cl.: H01M 50/209, H01M 50/289, H01M 50/507, H01M 10/48, H01M 50/503, H01M 50/569

(54) **BATTERY PACK**

(30) Priority: 07.09.2023 KR 20230119186
(71) Applicant: SAMSUNG SDI CO., LTD., Yongin-si, Gyeonggi-do 17084 (KR)
(72) Inventor: Lee, Hyeok, Yongin-si, Gyeonggi-do 17084 (KR)
(74) Representative: Gulde & Partner

(57) **Abstract**

A battery pack is disclosed. The battery pack includes: a plurality of battery cells, with each of the battery cells including a terminal portion including a first terminal and a second terminal. A side surface frame is provided to which the plurality of battery cells are inserted in an insertion direction. A plurality of connection portions are provided, with each of the connection portions being fixed at a position between adjacent battery cells of the plurality of battery cells along the insertion direction; and plurality of busbars are connected to the plurality of connection portions, with each of the busbars being electrically connected to terminal portions of the adjacent battery cells.

## Description

### BACKGROUND OF THE INVENTION

### (a) Field of the Invention

The present disclosure relates to a battery pack that does not require a holder for installing a busbar, does not cause deformation due to welding heat, and has improved durability.

### (b) Description of the Related Art

A secondary battery is also attracting attention as a main power source for an electric vehicle, a hybrid electric vehicle, a plug-in hybrid electric vehicle, or the like. Such vehicles are proposed as alternatives to conventional gasoline and diesel vehicles to solve various problems such as air pollution.

In the electric vehicle or the like, a battery module is used in which a plurality of battery cells are stacked, and the battery cells are electrically connected in series and in parallel to provide for a high-output and large-capacity battery.

In the battery module, terminals exposed at both ends of each battery cell are electrically connected by a busbar to provide a high voltage with the plurality of battery cells being inserted into a side surface frame.

In the battery module, a busbar holder, to which a plurality of busbars are connected, is installed to electrically connect the plurality of battery cells.

Because the busbar holder is welded to an upper portion of the side surface frame, there is a problem in which durability is deteriorated because of deformation due to welding heat during a coupling process.

### SUMMARY OF THE INVENTION

Embodiments of the present disclosure are to provide a battery pack that does not require a busbar holder using electrical connection of a plurality of battery cells, does not generate deformation due to welding heat, and improves durability.

A battery pack according to embodiments of the present disclosure includes: a plurality of battery cells, each of the battery cells including a terminal portion including a first terminal and a second terminal; a side surface frame to which the plurality of battery cells are inserted in an insertion direction; a plurality of connection portions, each of the connection portions being fixed at a position between adjacent battery cells of the plurality of battery cells along the insertion direction; and a plurality of busbars that are connected to the plurality of connection portions, each of the busbars being electrically connected to terminal portions the adjacent battery cells.

Each of the connection portions may include: a first connection portion that is fixed to a position between the adjacent battery cells; a second connection portion that is fixed to a position between the adjacent battery cells and is connected to one of the busbars at a position spaced apart from the first connection portion; and a buffer connection portion that connects the first connection portion and the second connection portion to each other at a length that is variable in a direction perpendicular to the insertion direction.

The first connection portion, the second connection portion, and the buffer connection portion may be connected to each other in the direction perpendicular to the insertion direction.

The first connection portion may include: a first frame that is fixed at a position between the adjacent battery cells; and a second frame that is coupled to a portion of an upper surface of the first frame and protrudes from the upper surface of the first frame.

In one embodiment, a first insertion protruding portion is inserted between the adjacent battery cells and may protrude from a lower portion of the first frame.

The second frame may be formed with a shorter length than a length of the first frame.

In one embodiment, a support protruding portion is fixed to the upper surface of the first frame and may protrude from a lower portion of the second frame.

The supporting protruding portion may be fixed to the first frame by heat staking.

The second connection portion may include a third frame disposed at a position between the adjacent battery cells at a position spaced apart from the first connection portion and to which one of the busbars is fixed.

In one embodiment, a second insertion protruding portion is inserted between the adjacent battery cells and may protrude from a lower portion of the third frame.

The one of the busbars may be fixed to the third frame by heat staking.

A first end of the buffer connection portion may be connected to a side surface of the first frame, a second end of the buffer connection portion may be connected to a side surface of the third frame, and a bent portion may be formed between the first and second ends of the buffer connection portion, with the bent portion having a variable length in the direction perpendicular to the insertion direction.

The bent portion may be bent in a lower direction of the adjacent battery cells.

Each of the busbars may include: a first portion that protrudes from a first side of the third frame to be electrically connected to a terminal portion of a first of the adjacent battery cells; and a second portion that protrudes from a second side of the third frame to be electrically connected to a terminal portion of a second of the adjacent battery cells and formed to have a different size from a size of the first portion.

A temperature sensor fixing portion may protrude from one side of one of the plurality of connection portions.

The temperature sensor fixing portion may include a sensor protruding portion protruding from a side surface of the second frame of the one of the plurality of connections portion and in which a sensor hole is formed where a temperature sensor is installed.

The temperature sensor may be installed in the sensor hole of the sensor protruding portion, and may be connected to a cable connected to a protection circuit module.

A mica sheet may be attached to each of the battery cells.

According to the embodiments of the present disclosure, a busbar may be electrically connected to a plurality of battery cells at an upper portion of the battery cell without using a conventional busbar holder for installing the busbar. Thus, there is no need for a change of a structure such as bending of a portion of a side frame constituting a side surface frame to connect the conventional holder, so that it is possible to optimize an installed configuration and reduce a manufacturing cost.

According to the embodiments of the present disclosure, because the busbar is fixed to the upper portion of the battery cell without using the conventional busbar holder, an installed height of a battery pack may be lowered to optimize an installed configuration of the battery pack.

According to the embodiments of the present disclosure, it is possible to fix a connection portion to the upper portion of the battery cell without using welding, so that it is possible to improve durability by preventing occurrence of deformation due to welding heat.

### BRIEF DESCRIPTION OF THE DRAWINGS

FIG. 1 is a perspective view schematically showing a battery pack according to a first embodiment of the present disclosure.
FIG. 2 is a plan view schematically showing a state in which a pair of battery cells of the battery pack of FIG. 1 are electrically connected by a connection portion and a busbar.
FIG. 3 is a cross-sectional view cut along a line A-A of FIG. 2.
FIG. 4 is a perspective view schematically showing a state in which the busbar is fixed to the connection portion according to the first embodiment of the present disclosure.
FIG. 5 is a plan view schematically showing a state where the busbar is fixed to the connection portion of FIG. 4.
FIG. 6 is a side view schematically showing a state where the busbar is fixed to the connection portion of FIG. 4.
FIG. 7 is a cross-sectional view cut along a line B-B of FIG. 6.
FIG. 8 is a main portion plan view schematically showing a state in which a temperature sensor installed at a temperature sensor fixing portion is connected to a cable according to the first embodiment of the present disclosure.
FIG. 9 is a main portion perspective view schematically showing a state in which the temperature sensor fixing portion is formed at the connection portion according to the first embodiment of the present disclosure.
FIG. 10 is a side view of FIG. 9.
FIG. 11 is a main portion exploded perspective view schematically showing a state in which the connection portion where the temperature sensor fixing portion is formed is separated from the battery cell according to the first embodiment of the present disclosure.
FIG. 12 is a side view schematically showing a connection portion according to a second embodiment of the present disclosure.

### DETAILED DESCRIPTION OF THE EMBODIMENTS

Embodiments of the present disclosure will be described more fully hereinafter with reference to the accompanying drawings so that those skilled in the art easily implements the embodiments. The present disclosure may be modified in various different ways, all without departing from the scope of the present disclosure as defined by the claims. In order to clearly describe the present disclosure, parts or portions that are irrelevant to the description are omitted in the drawings, and identical or similar constituent elements throughout the specification are denoted by the same reference numerals.

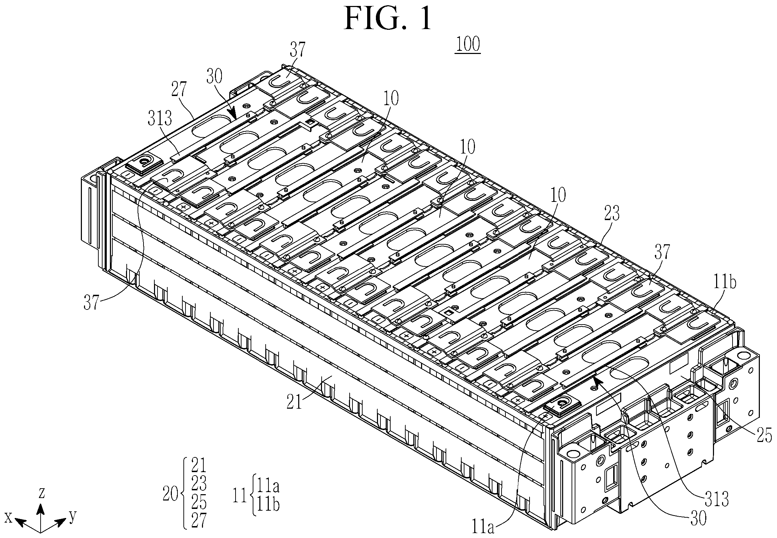

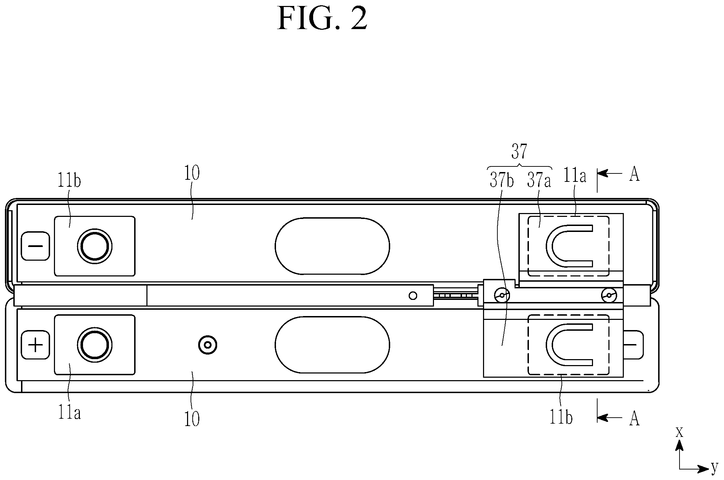

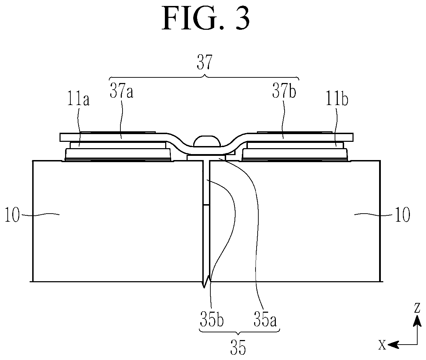

FIG. 1 is a perspective view schematically showing a battery pack according to a first embodiment of the present disclosure, FIG. 2 is a plan view schematically showing a state in which a pair of battery cells of the battery pack of FIG. 1 are electrically connected by a connection portion and a busbar, and FIG. 3 is a cross-sectional view cut along a line A-A of FIG. 2.

As shown in FIGS. 1 to 3, the battery pack 100 according to the first embodiment of the present disclosure may include a plurality of battery cells 10 each including a terminal portion 11 including a first terminal 11a and a second terminal 11b, a side surface frame 20 to which the plurality of battery cells 10 are inserted in a first (insertion) direction (an X-axis direction), a plurality of connection portions 30 fixed to an upper portion positions between the battery cells 10 along the first direction at an upper portion of the side surface frame 20, and busbars 37 connected to the connection portions 30 and electrically connected to terminal portions of a pair of adjacent battery cells 10.

The side surface frame 20 may include a first side frame 21 supporting one side surface of the plurality of battery cells 10, a second side frame 23 supporting the other side surface of the plurality of battery cells 10, a first end frame 25 having both ends connected to one end of each of the first side frame 21 and the second side frame 23, and a second end frame 27 having both ends connected to the other end of each of the first side frame 21 and the second side frame 23.

The first side frame 21 may be installed to support one side of the plurality of battery cells 10.

The second side frame 23 may be installed to support the other side of the plurality of battery cells 10.

The first end frame 25 may be installed to connect one of the ends of the first side frame 21 and the second side frame 23. In some embodiments, one end of the first end frame 25 may be connected to the one end of the first side frame 21 by a fastening member, and the other end of the first end frame 25 may be connected to the one end of the second side frame 23 by a fastening member.

The second end frame 27 may be installed to connect the other ends of the first side frame 21 and the second side frame 23. In some embodiments, one end of the second end frame 27 may be connected to the other end of the first side frame 21 by a fastening member, and the other end of the second end frame 27 may be connected to the other end of the second side frame 23 by a fastening member.

The connection portions 30 and the busbars 37 for electrically connecting the plurality of battery cells 10 to each other may be installed at an upper portion of the side surface frame 20.

The plurality of battery cells 10 may be inserted into the side surface frame 20 along the first direction, and the plurality of connection portions 30 may be fixed at upper portions of the plurality of battery cells 10 when they are disposed at the upper portions of the plurality of battery cells 10.

The connection portion 30 may be not directly fixed to the side surface frame 20. The connection portion 30 may be fixed to the upper portions of the plurality of battery cells 10 without a separate fastening member.

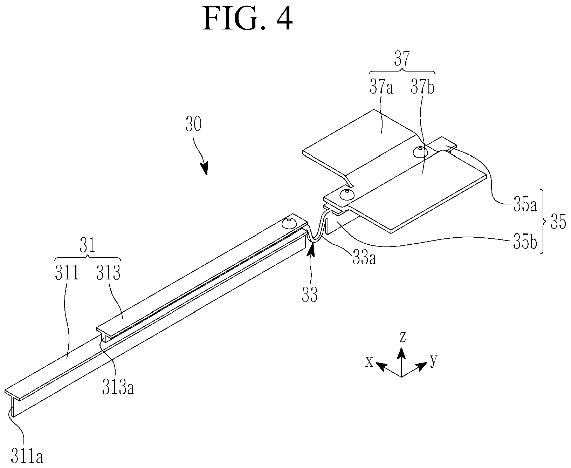

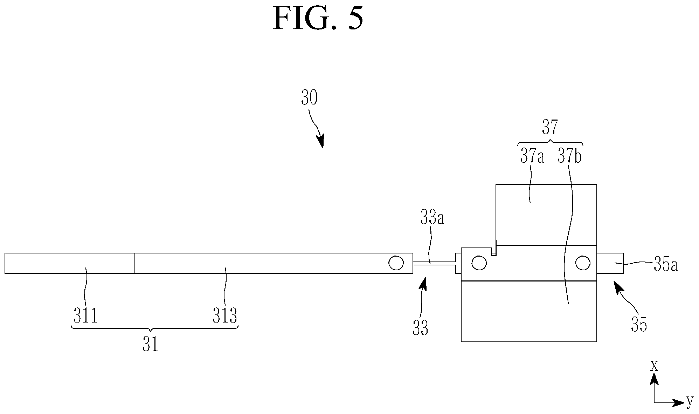

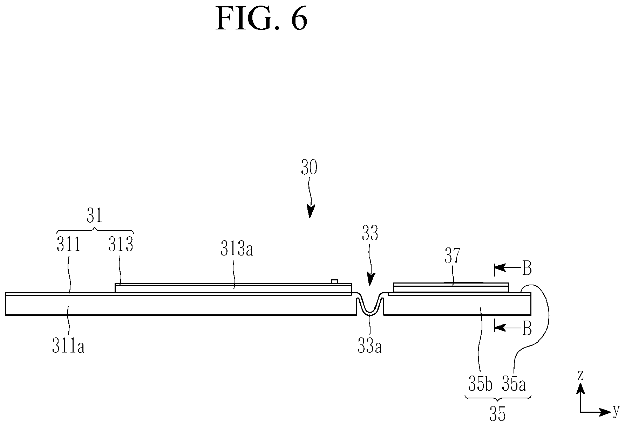

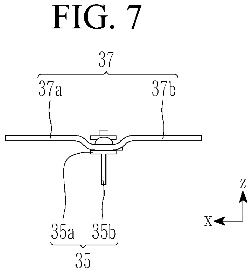

FIG. 4 is a perspective view schematically showing a state in which the busbar is fixed to the connection portion according to the first embodiment of the present disclosure, FIG. 5 is a plan view schematically showing a state where the busbar is fixed to the connection portion of FIG. 4, FIG. 6 is a side view schematically showing a state where the busbar is fixed to the connection portion of FIG. 4, and FIG. 7 is a cross-sectional view cut along a line B-B of FIG. 6.

Referring to FIGS. 4 to 7, the connection portion 30 may include a first connection portion 31 fixed at a position between battery cells 10, a second connection portion 35 fixed to a position between the battery cells 10 and connected to the busbar 37 at a position spaced apart from the first connection portion 31. The connection portion may also include a buffer connection portion 33 that connects the first connection portion 31 and the second connection portion 35 to each other with a variable length.

The first connection portion 31, the second connection portion 35, and the buffer connection portion 33 may be connected in one direction, and may extend in a second direction perpendicular to the first direction at the position between battery cells 10.

In a state in which the first connection portion 31 is disposed at an upper portion between battery cells 10, a portion of a lower portion of the first connection portion 31 may be inserted between the battery cells 10.

The first connection portion 31 may include a first frame 311 fixed to the position between battery cells 10, and a second frame 313 coupled to a portion of an upper surface of the first frame 311 and having one side connected to one end of the buffer connection portion 33.

The first frame 311 may have an approximately rectangular parallelopiped shape, and may be fixed without using a separate fastening member or the like in a state in which the first frame 311 is disposed between battery cells 10. The first frame 311 is not limited to a rectangular parallelopiped shape, and a portion of the first frame 311 may include a round shape, a plate shape, or the like.

One side of the first frame 311 may be disposed at an upper edge of the side surface frame 20, and the other side of the first frame 311 may extend to be connected to one end of the buffer connection portion 33.

A first insertion protruding portion 311a may protrude from a lower portion of the first frame 311. That is, the first insertion protruding portion 311a may protrude from a lower surface of the first frame 311. The first insertion protruding portion 311a may have a length corresponding to a length of the first frame 311.

The first insertion protruding portion 311a may protrude from the lower portion of the first frame 311 so as to be inserted into lower portions of a pair of battery cells 10 that are positioned adjacent to each other. The first frame 311 may be stably disposed at the upper portion of a battery cell 10 by a position fixing action of the first insertion protruding portion 311a.

In some embodiments, the first frame 311 may be fixed at the upper portion of a battery cell 10 in a state in which it is disposed at the upper portion of the battery cell 10 by a fixing action in which the first insertion protruding portion 311a protruding from the lower portion of the first frame 311 is inserted into a position between the battery cell 10 and an adjacent battery cell 10 without using a conventional fastening member or holder. For example, in the present embodiment, a configuration of the conventional holder is unnecessary, so that an installation configuration is optimized.

The first frame 311 may be connected to the second frame 313 in order to connect the first frame 311 to the buffer connection portion 33.

A portion of the second frame 313 along a length direction may be connected to the first frame 311, and one end of the buffer connection portion 33 may be connected to one side of the second frame 313.

The second frame 313 may have a shorter length than a length of the first frame 311, and a lower surface of the second frame 313 may be connected to an upper surface of the first frame 311.

The second frame 313 may be connected to an upper portion of the first frame 311 such that the second frame 313 protrudes from the first frame 311, and the second frame 313 may be fixed to the upper portion of the first frame 311 by heat staking. In some embodiments, the second frame 313 may be fixed to the upper surface of the first frame 311 by heat staking in a state in which a lower portion of the first frame 311 contacts the upper surface of the first frame 311 without using a separate fastening member.

To this end, a support protruding portion 313a for fixing the second frame 313 to the first frame 311 in a protruding state protrudes from a lower portion of the second frame 313. The support protruding portion 313a may allow the second frame 313 to be disposed at a height corresponding to a height at which the busbar 37 protrudes from an upper portion of the second connection portion 35. For example, installed heights of the second frame 313 and the busbar 37 may be the same or similar so that there is no step difference between the second frame 313 and the busbar 37. Thus, durability is improved by preventing interference of the busbar 37 by a predetermined component from occurring.

The first frame 311 may be connected to the second frame 313 in a state where the first frame 311 is connected to the buffer connection portion 33. The buffer connection portion 33 allows changes in a distance or a height that the first frame 311 and the second frame 313 are connected to each other. The buffer connection portion 33 may enable stable electrical connection between the battery cells 10 even if a distance or a height between the battery cells 10 changes when swelling occurs due to an abnormality in the battery cell 10. For example, one end of the buffer connection portion 33 may be connected to a side surface of the first frame 311, the other end of the buffer connection portion 33 may be connected to a side surface of the second frame 313, and a connection length between the ends of the buffer connection portion 33 may be variable.

The buffer connection portion 33 may be formed with a width smaller than widths of the first and second frames 311 and 313, the buffer connection portion 33 may be made of the same or similar material as materials of the first and second frames 311 and 313, and the buffer connection portion 33 may connected to the first and second frames 311 and 313 by welding.

If the swelling occurs due to the abnormality in the battery cell 10 so that a connection state between the first frame 311 and the second frame 313 changes, a bent portion 33a formed at the buffer connection portion 33 can compensate for the changed connection state. The bent portion 33a may be formed at one end and the other end of the buffer connection portion 33, and the bent portion 33a may be bent in a lower direction of the battery cell 10 to stably compensate for a state in which a vertical position of the first frame 311 and the second frame 313 is changed.

Although the bent portion 33a is illustratively described as being bent in a single shape at a position between both ends of the buffer connection portion 33, the present disclosure is not necessarily limited thereto, and a shape of the bent portion 33a may be changed to a plurality of bent shapes.

The second connection portion 35 may be connected to the other end of the buffer connection portion 33, and may be installed to electrically connect the busbar 37 to the battery cell 10 while being fixed to an upper portion of the battery cell 10 in a state in which the second connection portion 35 is disposed at the upper portion of the battery cell 10.

The second connection portion 35 may include a third frame 35a disposed at a position between battery cells 10 at a position spaced from the first connection portion 31 and to which the busbar 37 is fixed. The third frame 35a may be installed in a state extending in the second direction perpendicular to the first direction at the position between of battery cells 10. In a state in which the third frame 35a is disposed at an upper portion between battery cells 10, a part of a lower portion of the third frame 35a may be inserted between the battery cells 10.

To this end, a second insertion protruding portion 35b may protrude from the lower portion of the third frame 35a. That is, the second insertion protruding portion 35b may protrude from a lower surface of the third frame 35a, and may protrude with a length corresponding to a length of the third frame 35a. The second insertion protruding portion 35b may protrude from the lower portion of the third frame 35a to be inserted between a pair of battery cells 10 adjacent to each other. The second connection portion 35 may be stably disposed at the upper portion of the battery cell 10 by a position fixing action of the second insertion protruding portion 35b.

As described above, the second insertion protruding portion 35b may protrude from the lower portion of the third frame 35a so as to be inserted into the lower portions of a pair of battery cells 10 that are adjacent to each other. Thus, the third frame 35a may be stably disposed at the upper portion of the battery cell 10 by the position fixing action of the second insertion protruding portion 35b.

In some embodiments, the second connection portion 35 may be fixed at the upper portion of the battery cell 10 in a state in which it is disposed at the upper portion of the battery cell 10 by a fixing action in which the second insertion protruding portion 35b protruding from the lower portion of the third frame 35a is inserted into a position between the battery cells 10 without using a conventional fastening member or holder. For example, in the present embodiment, a configuration of the conventional holder may be unnecessary, so that an installation configuration is optimized.

As described above, the connection portion 30 may be fixed by inserting the first insertion protruding portion 311a and the second insertion protruding portion 35b into a position between battery cells 10 without using welding. Thus, it is possible to improve durability by preventing occurrence of deformation due to welding heat.

The busbar 37 may be fixed to the third frame 35a and be electrically connected to the terminal portions 11 of the battery cells 10. The busbar 37 may be fixed to the third frame 35a by heat staking, and the bus bar 37 may extend to both sides of the third frame 35a so as to be electrically connected to the terminal portion 11 of adjacent battery cells 10. The busbar 37 may include a first portion 37a protruding from one side of the third frame 35a to be electrically connected to the terminal portion 11 of one battery cell 10, and a second portion 37b protruding from the other side of the third frame 35a to be electrically connected to the terminal portion 11 of a second battery cell 10 and formed to have a size different from a size of the first portion 37a. The first portion 37a may be electrically connected to any one of the first terminal 11a and the second terminal 11b of one of a pair of adjacent battery cells 10. The second portion 37b may be electrically connected to any one of the first terminal 11a and the second terminal 11b of the other of the pair of adjacent battery cells 10. The first portion 37a and the second portion 37b of the busbar 37 may be electrically connected to the terminal portions 11 by heat staking.

A mica sheet (or an insulating sheet) 40 may be attached to each side surface of the plurality of battery cells 10. In some embodiments, the mica sheet 40 may be attached at a position between battery cells 10 so that the battery cells 10 are stably installed in a state in which the battery cells 10 are inserted to the side surface frame 20 along the first direction and are insulated from each other.

A temperature sensor fixing portion 50 may protrude from one side of any one of the plurality of connection portions 30. The temperature sensor fixing portion 50 may protrude from a side surface of the second frame 313 constituting the connection portion 30 to fix a temperature sensor 52.

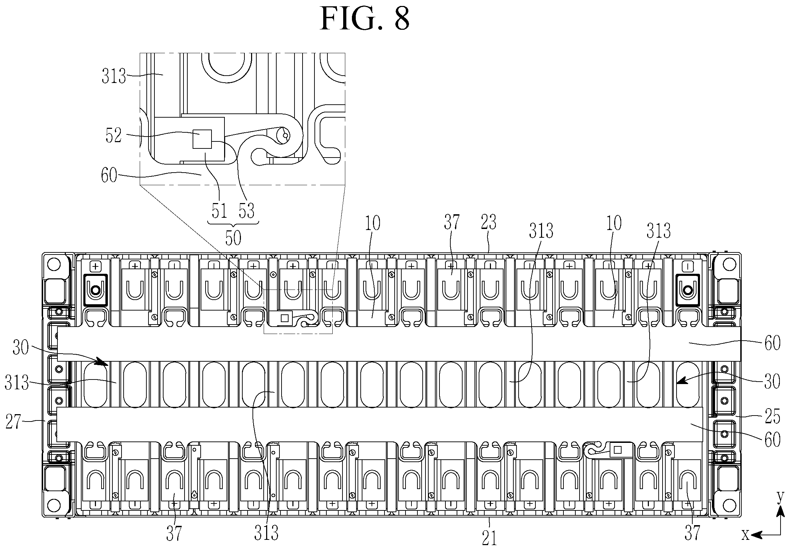

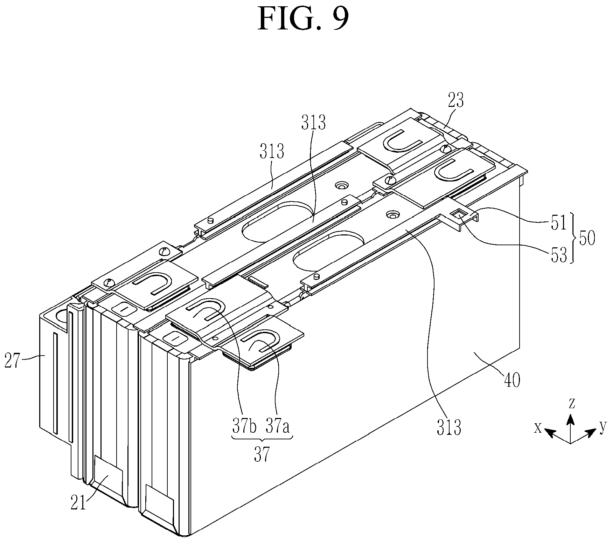

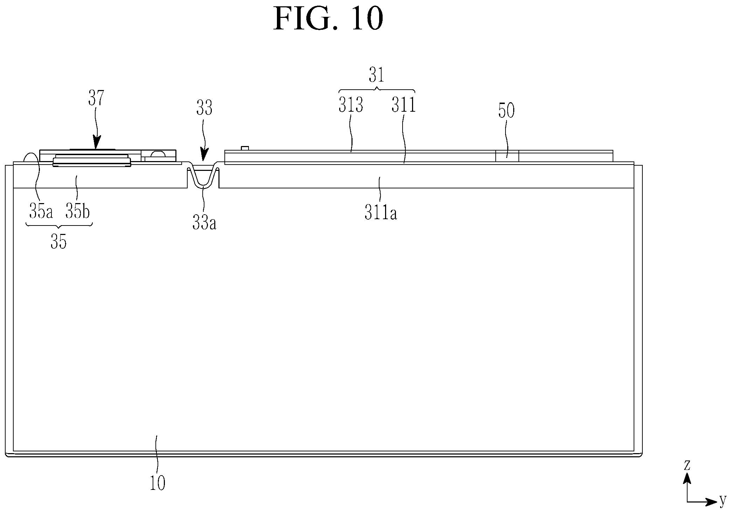

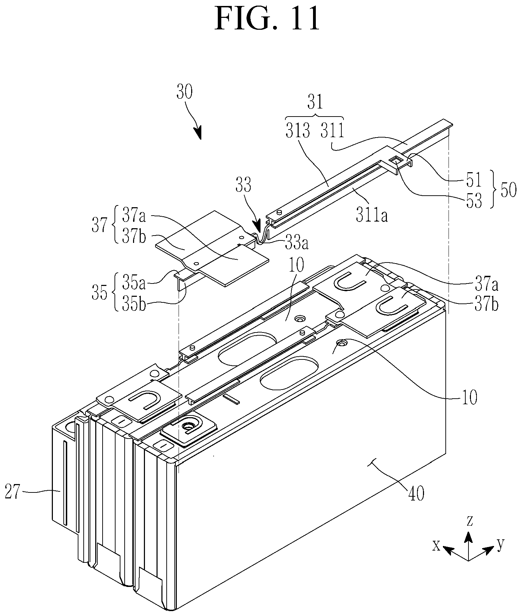

FIG. 8 is a main portion plan view schematically showing a state in which the temperature sensor installed at the temperature sensor fixing portion is connected to a cable according to the first embodiment of the present disclosure, FIG. 9 is a main portion perspective view schematically showing a state in which the temperature sensor fixing portion is formed at the connection portion according to the first embodiment of the present disclosure, FIG. 10 is a side view of FIG. 9, and FIG. 11 is a main portion exploded perspective view schematically showing a state in which the connection portion where the temperature sensor fixing portion is formed is separated from the battery cell according to the first embodiment of the present disclosure.

Referring to FIGS. 8 to 11, the temperature sensor fixing portion 50 may include a sensor protruding portion 51 protruding from a side surface of the second frame 313. A sensor hole 53 is formed where the temperature sensor 52 is installed. The sensor protruding portion 51 may be formed by being bent at a side surface of one end of the second frame 313, and the sensor hole 53 may be formed penetrating the inside of the sensor protruding portion 51.

The temperature sensor 52 may be connected to the cable 60 connected to a protection circuit module in a state in which the temperature sensor 52 is installed in the sensor hole 53 formed at the sensor protruding portion 51. One side of the cable 60 may be connected to the temperature sensor 52 and the other side of the cable 60 may be connected to the protection circuit module. The cable 60 is electrically connected to the temperature sensor 52 to transmit a measurement signal of the temperature sensor 52.

As described above, the battery pack 100 of the present embodiment may electrically connect the busbars 37 to the plurality of battery cells 10 without using a conventional busbar holder for installing a busbar. Thus, there is no need for a change of a structure such as bending of a portion of the side frame constituting the side surface frame 20 to connect the conventional busbar holder, so that it is possible to optimize an installed configuration and reduce a manufacturing cost.

In some embodiments, because the busbar 37 is fixed to the upper portion of the battery cell 10 without using the conventional busbar holder, an installed height of the battery pack 100 may be lowered to optimize an installed configuration of the battery pack 100.

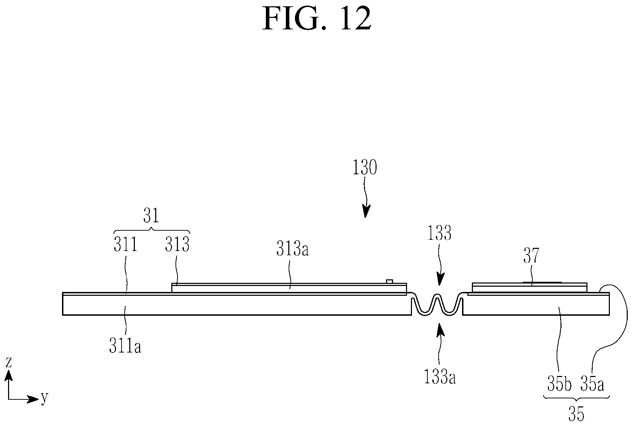

FIG. 12 is a side view schematically showing a connection portion according to a second embodiment of the present disclosure. The same reference numeral as that in FIGS. 1 to 11 denotes the same or similar member having the same or similar function. Thus, detailed descriptions of the same reference numerals are omitted.

As shown in FIG. 12, in a buffer connection portion 133 of the battery pack 100 according to the second embodiment of the present disclosure, a plurality of bent portions 133a may connect the first connection portion 31 and the second connection portion 35. The buffer connection portion 133 may enable stable electrical connection between the battery cells 10 even if a distance or a height between the battery cells 10 changes when swelling occurs due to an abnormality in the battery cell 10.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**<Description of symbols>**

| | | | | | |
|---|---|---|---|---|---|
| 10: | battery cell | 11: | terminal | portion | |
| 11a: | first terminal | 11b: | second terminal | | |
| 20: | side surface frame | 21: | first side | frame | |
| 23: | second side frame | 25: | first end frame | | |
| 27: | second end frame | 30: | connection portion | | |
| 31: | first connection portion | | | 311: | first frame |
| 311a: | first insertion protruding portion | 313: | second frame | | |
| 313a: | support protruding portion | | | | |
| 33, 133: | buffer connection portion | | | 33a, 133a: | bent portion |
| 35: | second connection portion | | | | |
| 35a: | third frame | 35b: | second insertion protruding portion | | |
| 37: | busbar | 37a: | first portion | 37b: | second portion |
| 40: | mica sheet | | | | |
| 50: | temperature sensor fixing portion | 51: | sensor protruding portion | | |
| 52: | temperature sensor | 53: | sensor hole | | |
| 60: | cable | | | | |
| 100: | battery pack | | | | |

## Claims

1. A battery pack (100) comprising:
a plurality of battery cells (10), each of the battery cells including a terminal portion (11) including a first terminal (11a) and a second terminal (11b);
a side surface frame (20) to which the plurality of battery cells (10) are inserted in an insertion direction (X);
a plurality of connection portions (30), each of the connection portions (30) being fixed at a position between adjacent battery cells of the plurality of battery cells (10) along the insertion direction (X); and
a plurality of busbars (37) that are connected to the plurality of connection portions (30), each of the busbars (37) being electrically connected to terminal portions (11) of the adjacent battery cells.

2. The battery pack (100) as recited in claim 1, wherein each of the connection portions (30) comprises:
a first connection portion (31) that is fixed to a position between the adjacent battery cells;
a second connection portion (35) that is fixed to a position between the adjacent battery cells and is connected to one of the busbars (37) at a position spaced apart from the first connection portion (31); and
a buffer connection portion (33, 133) that connects the first connection portion (31) and the second connection portion (35) to each other at a length that is variable in a direction perpendicular to the insertion direction (X).

3. The battery pack (100) as recited in claim 2, wherein the first connection portion (31), the second connection portion (35), and the buffer connection portion (33, 133) are connected to each other in the direction perpendicular to the insertion direction (X).

4. The battery pack (100) as recited in claim 2 or 3, wherein the first connection portion (31) comprises:
a first frame (311) that is fixed at a position between the adjacent battery cells; and
a second frame (313) that is coupled to a portion of an upper surface of the first frame (311) and protrudes from the upper surface of the first frame (311).

5. The battery pack (100) as recited in claim 4, wherein a first insertion protruding portion (311a) inserted between the adjacent battery cells protrudes from a lower portion of the first frame (311).

6. The battery pack (100) as recited in claim 4 or 5, wherein the second frame (313) is formed with a shorter length than a length of the first frame (311).

7. The battery pack (100) as recited in any one of claims 4 to 6, wherein a support protruding portion (313a) that is fixed to the upper surface of the first frame (311) protrudes from a lower portion of the second frame (313).

8. The battery pack (100) as recited in claim 7, wherein the support protruding portion (313a) is fixed to the first frame (311) by heat staking.

9. The battery pack (100) as recited in any one of claims 2 to 8, wherein the second connection portion (35) comprises a third frame (35a) disposed at a position between the adjacent battery cells at a position spaced apart from the first connection portion (31) and to which the one of the busbars (37) is fixed.

10. The battery pack (100) as recited in claim 9, wherein a second insertion protruding portion (35b) inserted between the adjacent battery cells protrudes from a lower portion of the third frame (35a).

11. The battery pack (100) as recited in claim 9 or 10, wherein the one of the busbars (37) is fixed to the third frame (35a) by heat staking.

12. The battery pack (100) as recited in any one of claims 9 to 11, as far as depending on claim 4, wherein a first end of the buffer connection portion (33, 133) is connected to a side surface of the first frame (311), a second end of the buffer connection portion (33, 133) is connected to a side surface of the third frame (35a), and a bent portion (33a, 133a) is formed between the first and second ends of the buffer connection portion (33, 133), with the bent portion (33a, 133a) having a variable length in the direction perpendicular to the insertion direction (X).

13. The battery pack as recited in claim 12, wherein the bent portion (33a, 133a) is bent in a lower direction of the adjacent battery cells.

14. The battery pack as recited in claim 9, or, as far as depending on claim 9, any one of claims 10 to 13, wherein each of the busbars (37) comprises:
a first portion (37a) that protrudes from a first side of the third frame (35a) to be electrically connected to a terminal portion (11) of a first of the adjacent battery cells; and
a second portion (37b) that protrudes from a second side of the third frame (35a) to be electrically connected to a terminal portion (11) of a second of the adjacent battery cells and formed to have a different size from a size of the first portion (37a).

15. The battery pack as recited in claim 12, wherein a temperature sensor fixing portion (50) protrudes from one side of one of the plurality of connection portions (30), and
wherein the temperature sensor fixing portion includes a sensor protruding portion protruding from a side surface of the second frame of the one of the plurality of connection portions and in which a sensor hole is formed where a temperature sensor is installed.

16. The battery pack as recited in claim 15, wherein the temperature sensor is installed in the sensor hole of the sensor protruding portion and is connected to a cable connected to a protection circuit module.
